# FASCICULE DE BREVET EUROPEEN

(11) **EP 1 448 964 B1**
(45) Date de publication et mention de la délivrance du brevet: **16.01.2008**
(21) Numéro de dépôt: 02795395.9
(22) Date de dépôt: 25.11.2002
(51) Int. Cl.: G01J 5/12, G01K 17/00

(54) **COMPARATEUR DE FLUX THERMIQUES**
WÄRMEFLUSSKOMPARATOR
HEAT FLOW RATE COMPARATOR

(30) Priorité: 27.11.2001 FR 0115310
(43) Date de publication de la demande: 25.08.2004
(73) Titulaire: Captec, 59493 Villeneuve d'Ascq (FR)
(72) Inventeur: THERY, Pierre, F-59650 Villeneuve-d'Ascq (FR); RAUCOULES, Florian, F-59810 Lesquin (FR)
(74) Mandataire: Verdure, Stéphane
(86) Numéro de dépôt international: PCT/FR2002/004033
(87) Numéro de publication internationale: WO 2003/048707

(56) Documents cités:
- US-A- 3 708 667
- US-A- 4 382 154
- US-A- 4 717 786
- US-A- 5 288 147

## Description

La présente invention concerne des dispositifs de mesure de flux thermiques, couramment appelés fluxmètres thermiques.

Elle concerne plus particulièrement un dispositif thermoélectrique capable de délivrer un signal électrique lorsqu'il reçoit un flux thermique sur au moins l'une de ses faces.

Le brevet US 4 029 521 décrit un exemple de détecteur thermoélectrique, qui présente l'inconvénient de ne pouvoir recevoir qu'un seul flux thermique destiné à être détecté. De plus ce détecteur thermoélectrique est nécessairement associé à un support qui a en particulier pour fonction d'extraire le flux thermique reçu sur la face sensible de ce dispositif.

La présente invention a notamment pour but de pallier ces inconvénients, en proposant un dispositif thermoélectrique à deux faces capable de délivrer un signal électrique qui dépend de la comparaison entre deux flux thermiques reçus simultanément, respectivement sur chacune des deux faces du dispositif.

A cet effet, un comparateur de flux thermiques selon l'invention possède deux faces d'entrée sensiblement planes et sensiblement parallèles entre elles, pouvant recevoir chacune un flux thermique, et comprend entre les deux faces d'entrée :
- un circuit thermoélectrique ayant une direction longitudinale déterminée, comprenant au moins un ruban sensiblement plan d'un premier matériau métallique possédant une conductivité thermique déterminée et un pouvoir thermoélectrique déterminé, ayant au moins deux faces, partiellement recouvert sur l'une de ses faces par de premières plaquettes métalliques disjointes d'un second matériau métallique possédant une conductivité thermique supérieure à celle du premier matériau métallique et un pouvoir thermoélectrique différent de celui du premier matériau métallique,
- deux premières couches d'un premier matériau isolant, disposées de part et d'autre du circuit thermoélectrique suivant une direction orthogonale au plan du ruban de premier matériau métallique, ce premier matériau isolant possédant une conductivité thermique inférieure à celles des dits premier et second matériaux métalliques,
- des secondes et troisièmes plaquettes disposées sur des faces respectives des dites deux premières couches de premier matériau isolant qui sont opposées au circuit thermoélectrique, et disposées relativement aux premières plaquettes pour former avec elles des cellules comprenant chacune une première, une seconde et une troisième plaquettes associées, lesdites seconde et troisième plaquettes associées d'une même cellule étant sensiblement disposées à l'aplomb, selon ladite direction orthogonale, de deux extrémités longitudinales différentes de ladite première plaquette de cette cellule.

Selon l'invention, les dites secondes et troisièmes plaquettes associées sont constituées d'un même matériau et possèdent sensiblement une même épaisseur considérée selon ladite direction orthogonale. Lesdites deux premières couches de premier matériau isolant ont de plus une même épaisseur considérée selon ladite direction orthogonale.

On entend par matériau isolant un matériau isolant électriquement et thermiquement. Un tel matériau possède notamment une conductivité thermique au moins 10 fois inférieure à celle du premier matériau métallique et du second matériau métallique. En particulier, le premier matériau isolant peut être un matériau organique, un verre, du mica, etc.

Le comparateur de flux thermiques selon l'invention présente une constitution partiellement symétrique de part et d'autre du circuit thermoélectique. Grâce à cette propriété, le signal électrique délivré par le comparateur dépend de la comparaison entre les deux flux thermiques incidents, reçus respectivement sur chacune de ses faces d'entrée.

Pour des conditions de fonctionnement appropriées du comparateur de flux thermiques selon l'invention, les deux faces d'entrée sont indépendantes l'une de l'autre et permettent la comparaison de deux flux thermiques indépendants respectivement incidents sur les deux faces d'entrée.

De plus, dans cette comparaison, chacun des deux flux thermiques peut être pondéré par un facteur numérique contrôlé. Ce facteur numérique est par exemple fixé par le rapport des surfaces respectives des secondes et troisièmes plaquettes dans un plan parallèle au plan du ruban du circuit thermoélectrique.

Dans un mode de réalisation préféré du comparateur de flux thermiques selon l'invention, les secondes et troisièmes plaquettes ont des dimensions identiques, si bien que le signal électrique délivré par le comparateur dépend directement de la différence entre les deux flux thermiques. De plus les deux faces d'entrée ont alors une même caractéristique dynamique de réponse par rapport à leurs flux thermiques respectifs.

II a été identifié que, pour ce type de constitution de détecteurs thermoélectriques, le signal détecté est lié au passage de la chaleur entre les deux faces d'entrée, résultant de la compétition entre les deux flux thermiques incidents. Les premières plaquettes coopèrent avec les secondes et troisièmes plaquettes qui présentent entre elles un décalage de position selon la direction longitudinale du ruban, qui est perpendiculaire à celles des flux thermiques incidents. Du fait de leur conductivité thermique élevée, les plaquettes associées canalisent en partie ce passage de la chaleur suivant la direction de ce décalage. De cette canalisation résulte un gradient de température localisé à chaque extrémité longitudinale des premières plaquettes. Chaque première plaquette génère alors un signal électrique élémentaire lorsque les deux flux thermiques sont tels que les gradients de température aux deux extrémités longitudinales de cette première plaquette ne se compensent pas.

Les premières, secondes et troisièmes plaquettes sont disposées de telle façon que les signaux électriques élémentaires générés respectivement par toutes les premières plaquettes s'additionnent. Ainsi, le signal électrique délivré par le comparateur de flux thermiques entre deux extrémités du ruban du circuit thermoélectrique correspond à l'addition de ces signaux électriques élémentaires.

Le premier matériau métallique est par exemple du constantan, du cuivre, ou un alliage à base de l'un au moins de ces métaux.

Dans un premier mode de réalisation de l'invention, le comparateur est conçu pour recevoir sur chacune de ses faces d'entrée un flux thermique radiatif.

Lesdites secondes et troisièmes plaquettes peuvent alors être des réflecteurs de rayonnement. Elles sont alors avantageusement constituées d'un matériau sélectionné pour son pouvoir réfléchissant du rayonnment, tel que l'aluminium, l'argent, l'or, le chrome, le cuivre ou un alliage comprenant au moins l'un de ces métaux.

De façon alternative, lesdites secondes et troisièmes plaquettes peuvent être des absorbeurs de rayonnement. Elles sont alors constituées d'un matériau sélectionné pour son pouvoir absorbant du rayonnement, tel que notamment un oxyde de chrome, ou encore un oxyde mixte de plusieurs métaux.

Dans un second mode de réalisation de l'invention, le comparateur est conçu pour recevoir sur chacune de ses faces d'entrée un flux thermique transmis par contact, c'est à dire un flux thermique conductif et/ou convectif.

Il comprend alors en outre deux secondes couches d'un second matériau isolant, ayant chacune au moins deux faces, respectivement disposées contre les deux dites premières couches de premier matériau isolant, du côté des faces respectives de celles-ci qui sont opposées au circuit thermoélectrique, et recouvrant les secondes ou troisièmes plaquettes respectivement.

Lesdites secondes et troisièmes plaquettes sont constituées d'un matériau possédant une conductivité thermique supérieure à celles des couches de premier et second matériaux isolants. Ce matériau constitutif des dites secondes et troisièmes plaquettes est préférablement un matériau métallique, tel que le cuivre, l'aluminium, l'argent, le chrome, le nickel et les alliages comprenant au moins l'un de ces métaux.

Dans un mode de réalisation préféré d'un comparateur de flux thermiques transmis par contact avec chacune des deux faces d'entrée, lesdites secondes couches de second matériau isolant ont une même épaisseur considérée selon ladite direction orthogonale.

Dans une variante de ce mode de réalisation préféré, l'épaisseur de chaque dite seconde couche de second matériau isolant est préférablement supérieure à l'épaisseur considérée selon ladite direction orthogonale de la dite première couche de premier matériau isolant contre laquelle elle est disposée. Une telle configuration procure en effet une meilleure précision de la détection des flux thermiques, en réduisant notamment l'influence sur le signal électrique délivré par le comparateur de la nature des supports extérieurs au comparateur en contact avec ses faces d'entrée.

Dans un autre mode de réalisation d'un comparateur de flux thermiques transmis par contact, le comparateur comprend deux couches supplémentaires disposées respectivement de part et d'autre des deux dites premières couches de premier matériau isolant. Ces couches supplémentaires sont respectivement en contact avec lesdites secondes et troisièmes plaquettes. En outre, entre chacune de ces couches supplémentaires et la première couche de premier matériau qui lui est voisine suivant ladite direction orthogonale, un volume d'isolation thermique est agencé autour des dites secondes ou troisièmes plaquettes respectivement.

Un comparateur de flux thermiques transmis par contact peut en outre comporter une couche métallique disposée sur l'une des dites secondes couches de second matériau isolant, contre la face de celle-ci qui est opposée au circuit thermoélectrique. Cette couche métallique améliore le contact thermique du comparateur avec un support extérieur au niveau de la face d'entrée. Elle permet aussi une uniformisation de la température au niveau de cette face d'entrée par répartition du flux thermique entrant dans le comparateur par cette face. La précision du signal électrique délivré est alors améliorée. Les deux faces d'entrée peuvent comporter chacune une telle couche métallique, afin d'améliorer symétriquement la précision du signal délivré par rapport au flux thermique reçu par chacune d'elles.

On peut éventuellement avoir recours, en outre, à l'une quelconque ou à plusieurs des dispositions suivantes :
- le circuit thermoélectrique comprend plusieurs rubans sensiblement plans et sensiblement parallèles entre eux, superposés selon ladite direction orthogonale et séparés entre eux par au moins une couche de matériau isolant, chaque ruban étant muni de premières plaquettes disposées de telle façon que les premières plaquettes de tous les rubans sont à l'aplomb les unes des autres selon ladite direction orthogonale ;
- le comparateur de flux thermiques peut être associé sur au moins l'une de ses faces d'entrée à un support, et comprend en outre sur cette face d'entrée un matériau de contact thermique avec le support ;
- le comparateur de flux thermiques incorpore en outre un thermocouple de mesure de température ;
- le thermocouple est formé par deux rubans respectivement en un premier et un second matériaux métalliques différents, ces deux rubans étant isolés électriquement dudit/desdits circuit(s) thermoélectrique(s) et étant en contact l'un avec l'autre.

L'invention concerne aussi l'utilisation d'un comparateur de flux thermiques tel que défini précédemment pour comparer deux flux thermiques respectivement reçus sur chacune de ses deux faces d'entrée.

Elle concerne encore l'utilisation d'un tel comparateur de flux thermiques pour générer un courant électrique entre des connexions reliant à un dispositif électrique extérieur des extrémités du ou des ruban(s) métallique(s) dudit ou desdits circuit(s) thermoélectrique(s) de ce comparateur de flux thermiques.

D'autres caractéristiques et avantages de l'invention apparaîtront au cours de la description suivante de formes de réalisation, données à titre d'exemples non limitatifs, en regard des dessins joints.

Sur les dessins :
- la figure 1a est une vue partielle en perspective éclatée d'un comparateur de flux thermiques radiatifs selon l'invention ;
- la figure 1b est une vue en coupe du même comparateur de flux thermiques radiatifs, montrant les flux thermiques radiatifs incidents sur les deux faces d'entrée ;
- la figure 2 représente un comparateur de flux thermiques transmis par contact ;
- la figure 3 représente une autre variante de comparateur de flux thermiques par contact selon l'invention ;
- la figure 4 illustre une disposition du circuit thermoélectrique à la surface d'une première couche de premier matériau isolant, combinée avec la disposition d'un thermocouple ;
- la figure 5 représente un comparateur de flux thermiques selon l'invention utilisé comme générateur de courant électrique et relié à un dispositif électrique.

Sur les différentes figures, les mêmes références désignent les mêmes éléments. Par référence à ces figures et en référence à un axe vertical N orthogonal au plan moyen des comparateurs représentés, on adoptera les terminologies «inférieur» et «supérieur» pour désigner des éléments disposés relativement les uns par rapport aux autres, selon cet axe vertical N. Afin d'apporter une meilleure lisibilité aux figures, les dimensions ont été modifiées par rapport à celles des dispositifs réels sans conserver les proportions relatives.

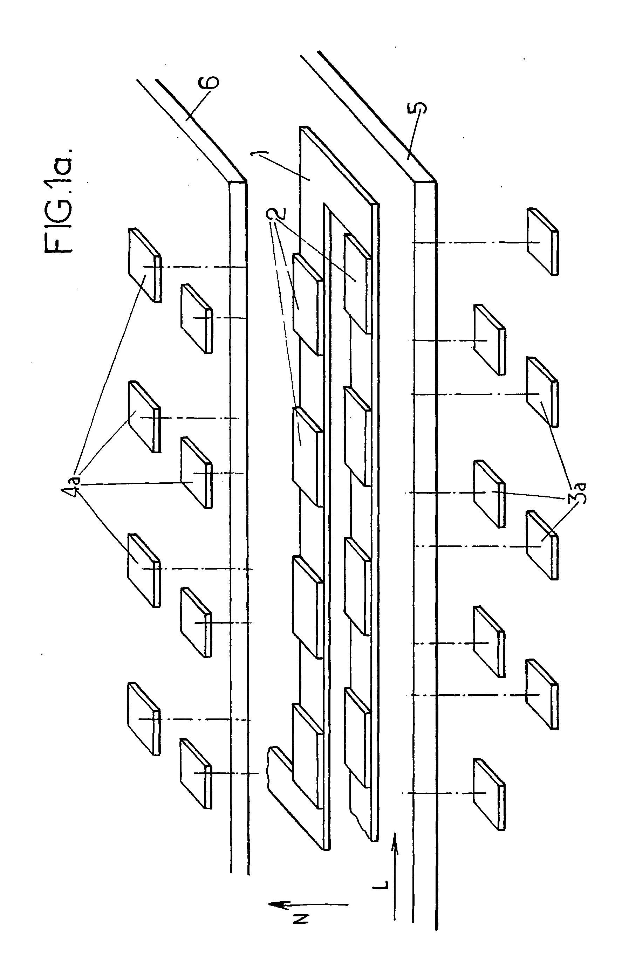

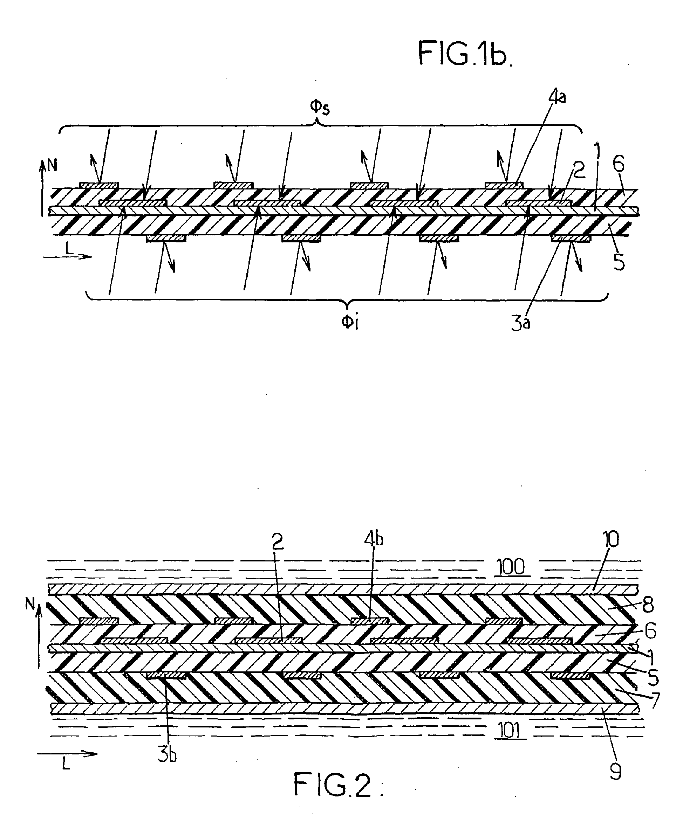

Les figures 1 a et 1 b représentent un comparateur de flux thermiques radiatifs, respectivement en perspective et en coupe. Ce comparateur est constitué d'un ruban 1 plan en forme de méandres ayant une direction longitudinale L, est en métal constantan et est recouvert partiellement sur sa face supérieure de plaquettes 2 rectangulaires de cuivre. Le ruban 1 a une épaisseur comprise entre 5 micromètres et 25 micromètres, par exemple de 25 micromètres, et une largeur de 0,3 millimètre. Les plaquettes 2 ont une longueur de 2 millimètres, une largeur de 0,3 millimètre et une épaisseur de 5 micromètres. Deux plaquettes 2 successives le long du ruban 1 sont séparées entre elles de 2 millimètres. De façon générale, les performances du comparateur sont meilleures lorsque la distance entre deux plaquettes 2 successives le long du ruban 1 est identique à la longueur des plaquettes 2.

La conductivité thermique du ruban 1 de constantan est environ de 20 W/m°C, et celle des plaquettes 2 environ de 400 W/m°C.

Avantageusement, les plaquettes 2 ont reçu un traitement de surface, par exemple du type oxydation ou sulfuration, de façon à les rendre particulièrement absorbantes vis-à-vis d'un rayonnement parvenant jusqu'à leur surface.

Le ruban 1 muni des plaquettes 2 est inséré entre deux films 5, 6 identiques de matériau plastique, par exemple de kapton, et d'épaisseur comprise entre 25 micromètres et 120 micromètres, par exemple de 50 micromètres.

De part et d'autres de ces deux films 5, 6, des réflecteurs en aluminium 3a et 4a sont disposés respectivement au dessous et au dessus des extrémités des plaquettes 2 rectangulaires de cuivre, chaque plaquette 2 ayant un réflecteur 3a et un réflecteur 4a au dessus de ses deux bords opposés orientés perpendiculairement à la direction longitudinale du ruban 1. Ces réflecteurs 3a, 4a ont par exemple une épaisseur comprise entre 0,01 micromètre et 30 micromètres, une largeur de 0,3 millimètre et une longueur de 2 millimètres. Les grands côtés d'un réflecteur 3a, 4a sont parallèles aux grands côtés de la plaquette 2 avec laquelle il est associé dans une même cellule, et le réflecteur 3a, 4a est centré par rapport à l'un des petits côtés de cette plaquette 2.

Les plaquettes 2 peuvent être avantageusement disposées de façon à être décalées entre elles entre deux parties adjacentes et parallèles du ruban 1 formant un aller et un retour du même méandre du ruban 1, avec un décalage selon la direction longitudinale L de ce méandre. Lorsque ce décalage est égal à la longueur des plaquettes 2, elle-même égale à la longueur entre deux plaquettes successives selon la direction longitudinale L, les réflecteurs 3a sont alignés selon des lignes perpendiculaires aux méandres, de même que les réflecteurs 4a, dans leurs plans respectifs. Les réflecteurs 3a et 4a peuvent alors être regroupés selon ces lignes, pour former des bandes continues, ce qui augmente encore la sensibilité du comparateur de flux thermiques.

La figure 1 b illustre schématiquement le comportement de deux flux thermiques radiatifs inférieur Φᵢ et supérieur Φₛ, incidents respectivement sur la face inférieure du film 5 et sur la face supérieure du film 6. Les faces respectives de ces films 5, 6 constituent les faces d'entrée du comparateur. Au niveau des réflecteurs 3a et 4a, chaque flux incident radiatif Φᵢ, Φₛ est réfléchi, de telle sorte que l'une des extrémités de chaque plaquette 2 reçoit le flux radiatif inférieur Φᵢ, alors que l'autre extrémité de la même plaquette reçoit le flux radiatif supérieur Φₛ. Selon celui de ces deux flux radiatifs qui est le plus important, un courant de chaleur circule dans chaque plaquette 2, dans le sens longitudinal de chaque plaquette 2, produisant à chaque extrémité des plaquettes 2 une contribution élémentaire au signal électrique délivré par le comparateur. Les contributions de toutes les plaquettes 2 sont additionnées ou soustraites entre elles, selon la position inférieure ou supérieure du réflecteur 3a ou 4a correspondant à l'extrémité de plaquette 2 à l'origine de la contribution élémentaire.

Un tel comparateur de flux thermiques radiatifs peut être suspendu verticalement de façon à comparer, sans contact, deux rayonnements thermiques incidents de part et d'autre du comparateur. Selon la ou les origines de ces deux rayonnements thermiques incidents, ils peuvent être indépendants l'un de l'autre ou partiellement corrélés entre eux, mais sont détectés par le comparateur de façon indépendante l'un de l'autre.

Il a par ailleurs été observé que le signal électrique délivré par un tel comparateur de flux thermiques radiatifs ne dépend que des flux radiatifs Φᵢ et Φₛ incidents sur les deux faces d'entrée, indépendamment de la température propre du comparateur de flux thermiques. Cette température propre du comparateur dépend d'autres paramètres, notamment de la position du comparateur par rapport à des flux thermiques par conduction et/ou convection, sans que ses variations ne provoquent des variations du signal électrique délivré.

La figure 2 est une vue en coupe d'un comparateur de flux thermiques transmis par contact. Il comprend, de même que précédemment, un ruban 1 de constantan ayant des dimensions analogues, recouvert partiellement de plaquettes 2 rectangulaires en cuivre ayant aussi les mêmes dimensions que précédemment, et inséré entre des mêmes films 5 et 6.

Les éléments conducteurs thermiques 3b et 4b sont disposés respectivement à la verticale des bords de chaque plaquette 2, selon la même disposition que celle des réflecteurs 3a et 4a du comparateur de flux radiatifs décrits plus haut, mais en substitution à ces réflecteurs 3a et 4a. Ils sont par exemple en cuivre, et ont les dimensions suivantes : longueur de 1,5 millimètres, largeur de 0,3 millimètre et épaisseur de 30 micromètres. Les éléments conducteurs 3b sont disposés entre le film de kapton 5 et un film supplémentaire de kapton 7. Les éléments conducteurs 4b sont disposés de la même façon entre le film de kapton 6 et un film supplémentaire de kapton 8. Les films 5 et 6 ont une même épaisseur de 50 micromètres, et les films 7 et 8 ont une même épaisseur de 120 micromètres. La face inférieure du film 7 et la face supérieure du film 8 constituent les deux faces d'entrée du comparateur.

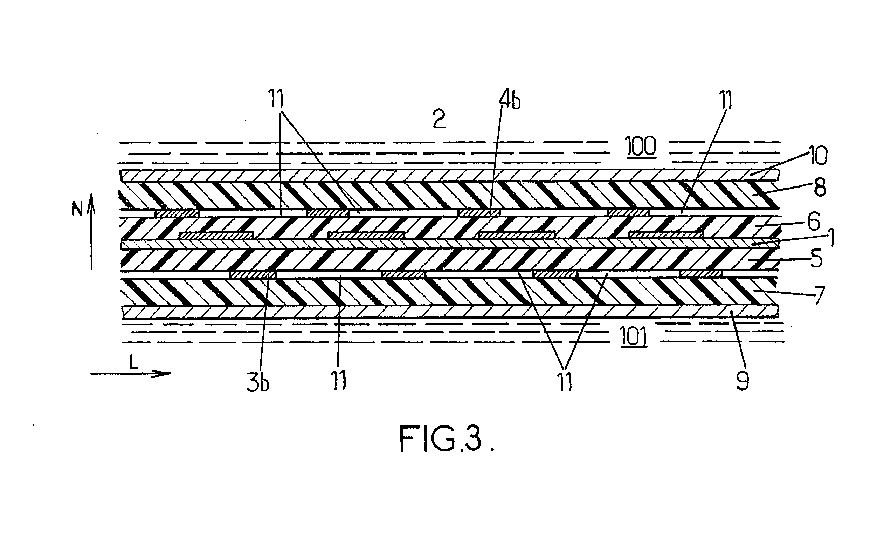

Ce comparateur de flux thermique est utilisé entre deux supports 100 et 101 qui lui communiquent par contact deux flux thermiques respectivement au niveau de ses faces d'entrée. Afin d'améliorer les contacts thermiques entre, respectivement, les supports 100 et 101 et les films 7 et 8, ces films sont chacun recouverts de couches métalliques respectives 9 et 10, sur leurs faces opposées au ruban 1. Ces couches métalliques, préférablement en un métal mou et d'une épaisseur comprise entre 0,01 micromètre et 100 micromètres, assurent une répartition de chaque flux thermique par contact sur toute la surface de chacune des faces d'entrée du comparateur. Une couche supplémentaire de matériau de contact thermique, non représentée sur les figures 2 et 3, peut être disposée entre les couches métalliques 9 et 10 et les supports 100 et 101. On utilise avantageusement pour ce matériau supplémentaire de contact thermique un gel capable de pénétrer les anfractuosités présentes à la surface des couches métalliques 9 et 10, ainsi que celles présentes à la surface des supports 100 et 101.

Le comparateur de flux thermiques par contact de la figure 3 est identique à celui de la figure 2, hormis que les éléments conducteurs thermiques 3b et 4b ont une épaisseur supérieure, par exemple de 70 micromètres. De cette façon, les films de kapton 5 et 7 ne sont pas directement en contact l'un avec l'autre, étant séparés entre eux à intervalles réguliers par les éléments 3b. De la même façon, les films de kapton 6 et 8 ne sont pas non plus directement en contact l'un avec l'autre, étant séparés l'un de l'autre par les éléments 4b. Des volumes d'isolation thermique 11, vides de matière solide, sont ainsi aménagés entre les films 5 et 7 d'une part, et entre les films 6 et 8 d'autre part, entourant respectivement les éléments conducteurs 3b et 4b. Une telle configuration procure une meilleure sensibilité au comparateur en accentuant la concentration du courant de chaleur autour des extrémités des plaquettes 2.

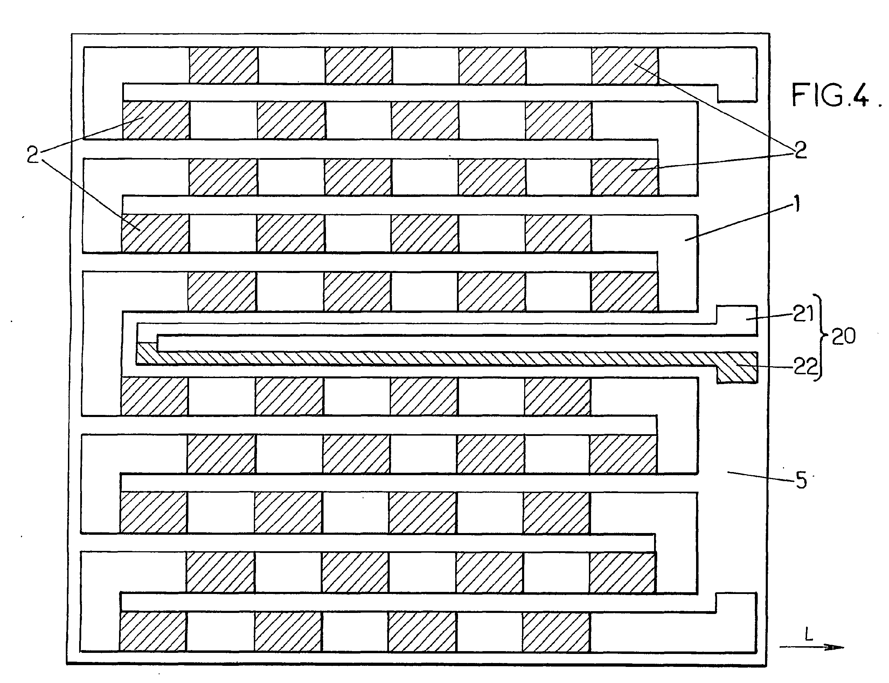

La figure 4 représente dans son ensemble un circuit thermoélectrique comprenant un ruban conducteur 1 tel que décrit précédemment. Il est en forme de méandres parallèles s'inscrivant à l'intérieur d'un contour général carré ou rectangulaire, par exemple carré de 3 centimètres de côté. Ce ruban 1 comporte sur sa surface supérieure les plaquettes de cuivre 2, et est lui-même appliqué contre la surface supérieure du film 5 de kapton. Au milieu de ses méandres est disposé un thermocouple 20, composé de deux parties 21, 22, respectivement constituées en deux matériaux métalliques distincts. Ces deux matériaux métalliques possèdent des pouvoirs thermoélectriques respectifs différents. La partie 21 est par exemple en constantan et la partie 22 est par exemple en cuivre. Ces deux parties 21, 22 sont en contact au niveau de l'une de leurs extrémités respectives 23, 24, de façon à former un thermocouple capable de délivrer une tension électrique en fonction de la température au sein du comparateur comprenant un tel agencement. Cette tension électrique est détectée par ailleurs entre deux autres extrémités respectives 25, 26 des parties 21, 22.

Un avantage particulier de ces modes de réalisation est la simplicité de fabrication de tels comparateurs de flux thermiques, leur faible prix de revient, ainsi que la facilité de mise en oeuvre de ces comparateurs. En effet, les plaquettes métalliques peuvent être réalisées par dépôts électrolytiques à partir de solutions liquides contenant sous formes ioniques dissoutes les métaux destinés à constituer ces plaquettes. Le procédé de fabrication comprend alors des étapes simples telles que de tels dépôts électrolytiques, la disposition et le retrait de masques, des étapes de gravure chimique, la découpe de films plastiques et/ou métalliques, et l'assemblage de couches superposées.

La mise en oeuvre d'un comparateur de flux thermique tel que ceux correspondant aux modes de réalisation précédents peut correspondre à des utilisations différentes.

Une première utilisation est la détection et la comparaison de flux thermiques radiatifs ou de flux thermiques échangés par contact entre deux milieux. Pour cela, deux extrémités du ruban 1 sont connectées aux bornes d'un appareil de mesure de tension électrique. La valeur de la tension indiquée par cet appareil est alors une mesure de la différence entre les flux thermiques reçus respectivement par les deux faces d'entrée du comparateur. Chacun des deux milieux sources des flux thermiques peut être un support solide, mais aussi un milieu fluide, liquide, gazeux, souple, et notamment un milieu biologique. Les deux milieux sources ne sont pas nécessairement identiques entre eux. Si l'un de ces deux milieux sources est transparent au rayonnement, il peut transmettre un flux thermique radiatif à l'une des faces du comparateur. Dans un tel cas, l'autre milieu source peut transmettre un flux thermique au comparateur soit par contact, soit sous forme de rayonnement. Aucune couche métallique 9/10 n'est alors disposée sur la ou les faces d'entrée destinées à recevoir un flux thermique radiatif, mais seulement, et éventuellement, que sur la ou les faces d'entrée du comparateur destinées à ne recevoir qu'un flux thermique transmis par contact.

Un cas particulier de cette première utilisation est la détection de phénomènes calorifiques, tels que la condensation ou l'évaporation d'humidité, intervenant au niveau de l'une au moins des deux faces d'entrée du comparateur. Pour cela, un comparateur de flux thermiques transmis par contact selon l'invention est par exemple disposé sur un support froid, l'une de ses deux faces d'entrée étant en contact avec ce support. Son autre face d'entrée est avantageusement recouverte d'un buvard capable d'absorber réversiblement une certaine quantité d'humidité. Cette humidité peut se condenser dans le buvard, ou s'évaporer sous l'effet d'une influence externe quelconque. Une telle condensation et une telle évaporation sont détectées par le comparateur de flux thermiques comme, respectivement, un apport et un défaut de flux thermique reçu par contact au niveau de la face d'entrée recouverte par le buvard, par rapport à la face d'entrée en contact avec le support. Une telle utilisation, permise par la sensibilité du comparateur de flux thermiques, est notamment adaptée pour la vérification de la chaîne du froid lors de l'approvisionnement de denrées alimentaires.

Une seconde utilisation est la production d'un courant électrique destiné à alimenter un dispositif électrique extérieur au comparateur. Dans ce cas, les extrémités du ruban 1 sont connectées à deux bornes d'alimentation du dispositif électrique.

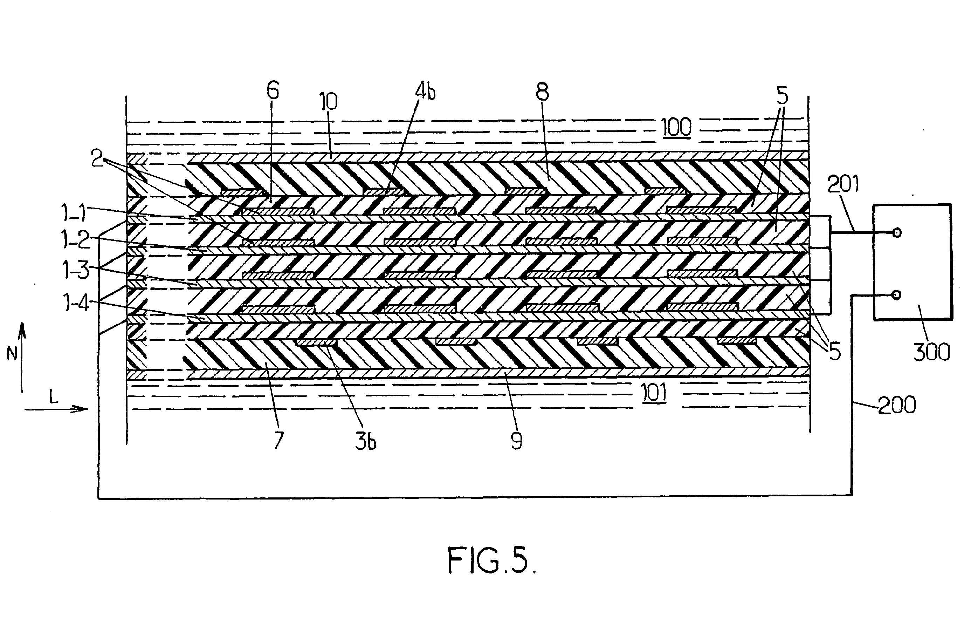

Pour cette application de production d'un courant électrique, le comparateur peut comprendre avantageusement plusieurs rubans métalliques, par exemple quatre, référencés 1-1, 1-2, 1-3 et 1-4 sur la figure 5 . Ces rubans équipés de plaquettes 2 de cuivre sont identiques entre eux et superposés pour former un empilement. Conformément à la figure 5, deux rubans successifs dans cet empilement sont séparés par un film 5 de matériau plastique tel que du kapton, par exemple de 50 micromètres d'épaisseur. Ils sont agencés de telle façon que les plaquettes 2 de chaque circuit soient positionnées à la verticale des plaquettes 2 du circuit inférieur de l'empilement. Des éléments conducteurs 3b, 4b, ainsi que des films de kapton 7, 8 et des couches métalliques 9, 10 sont disposées de part et d'autre de l'empilement pour compléter le comparateur. Les couches métalliques 9, 10 recouvrent les faces d'entrée du comparateur, et sont en contact avec deux supports 100, 101 qui transmettent au comparateur deux flux thermiques.

Des connexions électriques 200, 201 relient entre elles les extrémités des rubans 1-1, 1-2, 1-3, 1-4 de façon à les associer électriquement en un montage en parallèle, tel que représenté sur la figure 5, ou en série, ou en un montage électrique mixte parallèle-série. Elles les relient aussi aux bornes d'entrée du dispositif électrique extérieur 300. Les connexions 200, 201 sont agencées de telle sorte que le comparateur ainsi relié au dispositif 300 alimente ce dernier avec un courant électrique et une tension électrique adaptés à sa consommation.

## Revendications

1. Comparateur de flux thermiques ayant deux faces d'entrée sensiblement planes et sensiblement parallèles entre elles, pouvant recevoir chacune un flux thermique, et comprenant entre les deux faces d'entrée :
- un circuit thermoélectrique ayant une direction longitudinale (L) déterminée, comprenant au moins un ruban (1) sensiblement plan d'un premier matériau métallique possédant une conductivité thermique déterminée et un pouvoir thermoélectrique déterminé, ayant au moins deux faces, partiellement recouvert sur l'une de ses faces par de premières plaquettes (2) métalliques disjointes d'un second matériau métallique possédant une conductivité thermique supérieure à celle du premier matériau métallique et un pouvoir thermoélectrique différent de celui du premier matériau métallique,
- deux premières couches (5, 6) d'un premier matériau isolant, disposées de part et d'autre du circuit thermoélectrique suivant une direction orthogonale (N) au plan du ruban (1) de premier matériau métallique, ce premier matériau isolant possédant une conductivité thermique inférieure à celles des dits premier et second matériaux métalliques,
- des secondes (3a) et (3b) troisièmes (4a), (4b) plaquettes disposées sur des faces respectives des dites deux premières couches (5, 6) de premier matériau isolant qui sont opposées au circuit thermoélectrique, et disposées relativement aux premières plaquettes (2) pour former avec elles des cellules comprenant chacune une première, une seconde et une troisième plaquettes associées, lesdites seconde (3a) et troisième (4a) plaquettes associées d'une même cellule étant sensiblement disposées à l'aplomb, selon ladite direction orthogonale (N), de deux extrémités longitudinales différentes de ladite première plaquette (2) de cette cellule,
dans lequel les dites secondes (3a) et troisièmes (4a) plaquettes associées sont constituées d'un même matériau et possèdent sensiblement une même épaisseur considérée selon ladite direction orthogonale (N), et dans lequel lesdites deux premières couches (5, 6) de premier matériau isolant ont une même épaisseur considérée selon ladite direction orthogonale (N).

2. Comparateur de flux thermiques selon la revendication 1, dans lequel lesdites secondes (3a) et troisièmes (4a) plaquettes sont des réflecteurs de rayonnement.

3. Comparateur de flux thermiques selon la revendication 2, dans lequel lesdites secondes (3a) et troisièmes (4a) plaquettes sont constituées d'un matériau sélectionné dans la liste comprenant l'aluminium, l'argent, l'or, le chrome, le cuivre et les alliages comprenant au moins l'un de ces métaux.

4. Comparateur de flux thermiques selon la revendication 1, dans lequel lesdites secondes (3a) et troisièmes (4a) plaquettes sont des absorbeurs de rayonnement.

5. Comparateur de flux thermiques selon la revendication 1, comprenant en outre deux secondes couches (7, 8) d'un second matériau isolant, ayant chacune au moins deux faces, respectivement disposées contre les deux dites premières couches (5, 6) de premier matériau isolant, du côté des faces respectives de celles-ci qui sont opposées au circuit thermoélectrique, et recouvrant les secondes (3b) ou troisièmes (4b) plaquettes, et dans lequel lesdites secondes et troisièmes plaquettes sont constituées d'un matériau possédant une conductivité thermique supérieure à celles des couches de premier (5, 6) et second (7, 8) matériaux isolants.

6. Comparateur de flux thermiques selon la revendication 5, dans lequel le matériau constitutif des dites secondes (3b) et troisièmes (4b) plaquettes est un matériau métallique.

7. Comparateur de flux thermiques selon la revendication 6, dans lequel le matériau constitutif des dites secondes (3b) et troisième (4b) plaquettes est sélectionné parmi la liste comprenant le cuivre, l'aluminium, l'argent, le chrome, le nickel et les alliages comprenant au moins l'un de ces métaux.

8. Comparateur de flux thermiques selon l'une quelconque des revendications 5 à 7, dans lequel lesdites secondes couches (7, 8) de second matériau isolant ont une même épaisseur considérée selon ladite direction orthogonale (N).

9. Comparateur de flux thermiques selon l'une quelconque des revendications 5 à 8, dans lequel les dites secondes couches (7, 8) de second matériau isolant ont chacune une épaisseur considérée selon ladite direction orthogonale (N) supérieure à l'épaisseur considérée selon ladite direction orthogonale (N) de ladite première couche (5, 6) de premier matériau isolant contre laquelle elle est disposée.

10. Comparateur de flux thermiques selon la revendication 1, comprenant en outre deux couches supplémentaires (7, 8) disposées respectivement de part et d'autre des deux dites premières couches (5, 6) de premier matériau isolant, dans lequel ces couches supplémentaires sont respectivement en contact avec lesdites secondes (3b) et troisièmes (4b) plaquettes, et dans lequel, entre chaque couche supplémentaire (7, 8) et ladite première couche (5, 6) de premier matériau isolant qui lui est voisine suivant ladite direction orthogonale (N), un volume d'isolation thermique (11) est agencé entre les dites secondes (3b) ou troisièmes (4b) plaquettes respectivement.

11. Comparateur de flux thermiques selon l'une quelconque des revendications 5 à 10, comprenant en outre une première couche métallique (9) disposée sur l'une des dites secondes couches (7, 8) de second matériau isolant, contre la face de celle-ci qui est opposée au circuit thermoélectrique.

12. Comparateur de flux thermiques selon l'une quelconque des revendications 5 à 10, comprenant en outre deux couches métalliques (9, 10) disposées respectivement contre lesdites secondes couches (7, 8) de second matériau isolant, contre les faces de celles-ci qui sont opposées au circuit thermoélectrique.

13. Comparateur de flux thermiques selon l'une quelconque des revendications précédentes, dans lequel le premier matériau métallique est à base de constantan.

14. Comparateur de flux thermiques selon l'une quelconque des revendications 1 à 12, dans lequel le premier matériau métallique est à base de cuivre.

15. Comparateur de flux thermiques selon l'une quelconque des revendications précédentes, dans lequel le second matériau métallique est sélectionné parmi la liste comprenant le cuivre, l'or, l'argent, le nickel et les alliages comprenant au moins l'un de ces métaux.

16. Comparateur de flux thermiques selon l'une quelconque des revendications précédentes, dans lequel le circuit thermoélectrique comprend plusieurs rubans (1-1, 1-2, 1-3, 1-4), sensiblement plans et sensiblement parallèles entre eux, superposés selon ladite direction orthogonale (N) et séparés entre eux par au moins une couche (5) de matériau isolant, chaque ruban étant muni de premières plaquettes (2) disposées de telle façon que les premières plaquettes de tous les rubans sont à l'aplomb les unes des autres selon ladite direction orthogonale.

17. Comparateur de flux thermiques selon l'une quelconque des revendications 5 à 16, pouvant être associé sur au moins l'une de ses faces d'entrée à un support (100, 101), et comprenant en outre sur cette face d'entrée un matériau de contact thermique avec le support.

18. Comparateur de flux thermiques selon l'une quelconque des revendications précédentes, incorporant en outre un thermocouple (20) de mesure de température.

19. Comparateur de flux thermiques selon la revendication 18, dans lequel le thermocouple (20) est formé par deux rubans (21, 22) respectivement en un premier et un second matériaux métalliques différents, ces deux rubans étant isolés électriquement dudit/desdits circuit(s) thermoélectrique(s) et en contact l'un avec l'autre.

20. Utilisation d'un comparateur de flux thermiques selon l'une quelconque des revendications 1 à 19, pour comparer deux flux thermiques incidents respectivement reçus sur chacune de ses deux faces d'entrée.

21. Utilisation d'un comparateur de flux thermiques selon l'une quelconque des revendications 1 à 19, pour détecter un phénomène calorifique intervenant au niveau de l'une au moins des deux faces d'entrée du comparateur.

22. Utilisation d'un comparateur de flux thermiques selon l'une quelconque des revendications 1 à 19, pour générer un courant électrique entre des connexions (200, 201) reliant à un dispositif électrique extérieur (300) des extrémités du ou des ruban(s) métallique(s) dudit ou desdits circuit(s) thermoélectrique(s) de ce comparateur de flux thermiques.

## Claims

1. A heat flux comparator having two input faces that are approximately planar and approximately parallel to each other, each able to receive a heat flux, and comprising, between the two input faces:
- a thermoelectric circuit having a defined longitudinal direction (L), comprising at least one approximately plane strip (1) of a first metallic material having a defined thermal conductivity and a defined thermoelectric power, having at least two faces, partially covered on one of its faces with first separate metal pads (2) made of a second metallic material having a thermal conductivity greater than that of the first metallic material and a thermoelectric power different from that of the first metallic material;
- two first layers (5, 6) of a first insulating material, which layers are placed on either side of the thermoelectric circuit in a direction (N) orthogonal to the plane of the strip (1) of first metallic material, this first insulating material having a thermal conductivity less than those of said first and second metallic materials;
- second (3a), (3b) and third (4a), (4b) pads placed on respective faces of said two first layers (5, 6) of first insulating material, which faces are directed away from the thermoelectric circuit and are placed relative to the first pads (2) in order to form, with the latter, cells each comprising a first, a second and a third associated pad, said second (3a) and third (4a) associated pads of the same cell being placed approximately in line, along said orthogonal direction (N), with two different longitudinal ends of said first pad (2) of this cell,
wherein said second (3a) and third (4a) associated pads are made of the same material and have approximately a same thickness along said orthogonal direction (N), and wherein said two first layers (5, 6) of first insulating material have a same thickness along said orthogonal direction (N).

2. The heat flux comparator as claimed in Claim 1,
wherein said second (3a) and third (4a) pads are radiation reflectors.

3. The heat flux comparator as claimed in Claim 2,
wherein said second (3a) and third (4a) pads are made of a material selected from the list comprising aluminum, silver, gold, chromium, copper and alloys comprising at least one of these metals.

4. The heat flux comparator as claimed in Claim 1,
wherein said second (3a) and third (4a) pads are radiation absorbers.

5. The heat flux comparator as claimed in Claim 1, which furthermore includes two second layers (7, 8) of a second insulating material, each having at least two faces, which are placed against said two first layers (5, 6) of first insulating material respectively, on the side of those respective faces of said first layers that are directed away from the thermoelectric circuit, and covering the second (3b) or third (4b) pads, and wherein said second and third pads are made of a material having a thermal conductivity greater than that of the layers (5, 6) of first insulating material and layers (7, 8) of second insulating material.

6. The heat flux comparator as claimed in Claim 5,
wherein the constituent material of said second (3b) and third (4b) pads is a metallic material.

7. The heat flux comparator as claimed in Claim 6,
wherein the constituent material of said second (3b) and third (4b) pads is selected from the list comprising copper, aluminum, silver, chromium, nickel and alloys comprising at least one of these metals.

8. The heat flux comparator as claimed in any one of claims 5 to 7, wherein said second layers (7, 8) of second insulating material have a same thickness along said orthogonal direction (N).

9. The heat flux comparator as claimed in any one of claims 5 to 8, wherein said second layers (7, 8) of second insulating material each have a thickness along said orthogonal direction (N) greater than the thickness along said orthogonal direction (N) of said first layer (5, 6) of first insulating material against which it is placed.

10. The heat flux comparator as claimed in Claim 1, which further includes two additional layers (7, 8) placed on either side of the two said first layers (5, 6) of first insulating material respectively, wherein these additional layers are in contact with said second (3b) and third (4b) pads respectively and wherein, between each additional layer (7, 8) and said first layer (5, 6) of first insulating material that is adjacent to it along said orthogonal direction (N), a volume of thermal insulation (11) is provided between said second (3b) or third (4b) pads respectively.

11. The heat flux comparator as claimed in any one of claims 5 to 10, which furthermore includes a first metallic layer (9) placed on one of said second layers (7, 8) of second insulating material, against that face of said one of said second layers that is directed away from the thermoelectric circuit.

12. The heat flux comparator as claimed in any one of claims 5 to 10, which furthermore includes two metallic layers (9, 10) placed against said second layers (7, 8) of second insulating material respectively, against those faces of said second layers that are directed away from the thermoelectric circuit.

13. The heat flux comparator as claimed in any one of the preceding claims, wherein the first metallic material is based on constantan.

14. The heat flux comparator as claimed in any one of claims 1 to 12, wherein the first metallic material is based on copper.

15. The heat flux comparator as claimed in any one of the preceding claims, wherein the second metallic material is selected from the list comprising copper, gold, silver, nickel and alloys comprising at least one of these metals.

16. The heat flux comparator as claimed in any one of the preceding claims, wherein the thermoelectric circuit comprises several strips (1-1, 1-2, 1-3, 1-4) that are approximately planar and approximately parallel to one another, superposed along said orthogonal direction (N) and separated from each other by at least one layer (5) of insulating material, each strip being provided with first pads (2) placed so that the first pads of all the strips are in line with one another along said orthogonal direction.

17. The heat flux comparator as claimed in any one of claims 5 to 16, suitable for being associated on at least one of its input faces with a support (100, 101), and which furthermore includes, on this input face, a material for thermal contact with the support.

18. The heat flux comparator as claimed in any one of the preceding claims, which furthermore incorporates a thermocouple (20) for temperature measurement.

19. The heat flux comparator as claimed in Claim 18,
wherein the thermocouple (20) is formed by two strips (21, 22) made of different first and second metallic materials respectively, these two strips being electrically isolated from said thermoelectric circuit(s) and in contact with each other.

20. Use of a heat flux comparator as claimed in any one of claims 1 to 19 for comparing two incident heat fluxes that are received on each of its two input faces respectively.

21. The use of a heat flux comparator as claimed in any one of claims 1 to 19 for detecting a thermal phenomenon occurring at at least one of the two input faces of the comparator.

22. The use of a heat flux comparator as claimed in any one of claims 1 to 19 for generating an electrical current between connections (200, 201) that connect ends of the metal strip or strips of said thermoelectric circuit or circuits of this heat flux comparator to an external electrical device (300).

## Patentansprüche

1. Wärmeflusskomparator mit zwei Eingangsseiten, die im Wesentlichen eben und im Wesentlichen zueinander parallel sind, die jeweils einen Wärmefluss empfangen können und zwischen den zwei Eingangsseiten Folgendes aufweisen:
- eine thermoelektrische Schaltung einer bestimmten Längsrichtung (L), die mindestens ein Band (1) aufweist, das im Wesentlichen zu einem ersten Metallwerkstoff eben ist und eine bestimmte Wärmeleitfähigkeit und eine bestimmte thermoelektrische Kapazität aufweist, mit mindestens zwei Seiten, teilweise auf einer ihrer Seiten mit ersten getrennten Metallplättchen (2) aus einem zweiten Metallwerkstoff bedeckt, die eine Wärmeleitfähigkeit aufweisen, die größer ist als die des ersten Metallwerkstoffs, und eine thermoelektrische Kapazität, die von der des ersten Metallwerkstoffs unterschiedlich ist,
- zwei erste Schichten (5, 6) eines ersten Isoliermaterials, die zu beiden Seiten der thermoelektrischen Schaltung entlang einer Richtung (N) orthogonal zu der Ebene des Bands (1) aus erstem Metallwerkstoff angeordnet sind, wobei dieser erste Isolierwerkstoff eine Wärmeleitfähigkeit aufweist, die kleiner ist als die Wärmeleitfähigkeiten des ersten und des zweiten Metallwerkstoffs,
- zweite (3a), (3b) und dritte (4a), (4b) Plättchen, die auf jeweiligen Seiten der zwei ersten Schichten (5, 6) aus erstem Isolierwerkstoff angeordnet sind, die der thermoelektrischen Schaltung entgegen gesetzt sind, und die in Bezug auf die ersten Plättchen (2) angeordnet sind, um mit ihnen Zellen zu bilden, die jeweils ein dazugehöriges erstes, zweites und drittes Plättchen aufweisen, wobei das zugehörige zweite (3a) und dritte (4a) Plättchen einer gleichen Zelle im Wesentlichen in der Senkrechten gemäß der orthogonalen Richtung (N) von zwei unterschiedlichen Längsenden des ersten Plättchens (2) dieser Zelle angeordnet sind,
wobei die zugehörigen zweiten (3a) und dritten (4a) Plättchen aus dem gleichen Werkstoff bestehen und im Wesentlichen eine gleiche Stärke entlang der orthogonalen Richtung (N) besitzen und wobei die zwei ersten Schichten (5, 6) aus erstem Isolierwerkstoff eine gleiche Stärke entlang der orthogonalen Richtung (N) haben.

2. Wärmeflusskomparator nach Anspruch 1, bei dem die zweiten (3a) und dritten (4a) Plättchen Strahlungsreflektoren sind.

3. Wärmeflusskomparator nach Anspruch 2, bei dem die zweiten (3a) und dritten (4a) Plättchen aus einem Werkstoff bestehen, der aus der Liste ausgewählt ist, die Aluminium, Silber, Gold, Chrom, Kupfer und die Legierungen umfasst, die mindestens eines dieser Metalle enthalten.

4. Wärmeflusskomparator nach Anspruch 1, bei dem das zweite (3a) und das dritte (4a) Plättchen Strahlungsabsorber sind.

5. Wärmeflusskomparator nach Anspruch 1, der ferner zwei zweite Schichten (7, 8) eines zweiten Isolierwerkstoffs aufweist, die jede mindestens zwei Seiten haben, die jeweils zwischen den zwei ersten Schichten (5, 6) aus erstem Isolierwerkstoff angeordnet sind, auf der Seite der jeweiligen Seiten dieser, die der thermoelektrischen Schaltung entgegen gesetzt sind, und die das zweite (3b) oder dritte (4b) Plättchen bedecken, und bei dem das zweite und dritte Plättchen aus einem Werkstoff bestehen, der eine Wärmeleitfähigkeit aufweist, die größer ist als die der ersten (5, 6) und zweiten (7, 8) Schicht aus Isolierwerkstoffen.

6. Wärmeflusskomparator nach Anspruch 5, bei dem der Werkstoff, der das zweite (3b) und dritte (4b) Plättchen bildet, ein Metallwerkstoff ist.

7. Wärmeflusskomparator nach Anspruch 6, bei dem der Werkstoff, der das zweite (3b) und dritte (4b) Plättchen bildet, ausgewählt wird aus der Liste, die Kupfer, Aluminium, Silber, Chrom, Nickel und die Legierungen enthält, die mindestens eines dieser Metalle enthalten.

8. Wärmeflusskomparator nach einem der Ansprüche 5 bis 7, bei dem die zweiten Schichten (7, 8) aus zweitem Isolierwerkstoff eine gleiche Stärke in die orthogonale Richtung (N) haben.

9. Wärmeflusskomparator nach einem der Ansprüche 5 bis 8, bei dem die zweiten Schichten (7, 8) aus zweitem Isolierwerkstoff jeweils eine Stärke in die orthogonale Richtung (N) haben, die größer ist als die Stärke in die orthogonale Richtung (N) der ersten Schicht (5, 6) aus erstem Isolierwerkstoff, gegen welche sie angeordnet ist.

10. Wärmeflusskomparator nach Anspruch 1, der ferner zwei zusätzliche Schichten (7, 8) aufweist, die jeweils zu einer Seite der zwei ersten Schichten (5, 6) aus erstem Isolierwerkstoff angeordnet sind, bei dem diese zusätzlichen Schichten jeweils mit dem zweiten (3b) und dritten (4b) Plättchen in Berührung sind, und bei dem zwischen jeder zusätzlichen Schicht (7, 8) und der ersten Schicht (5, 6) aus erstem Isolierwerkstoff, die neben ihr in die orthogonale Richtung (N) liegt, ein Wärmeisoliervolumen (11) zwischen dem zweiten (3b) oder dritten (4b) Plättchen eingerichtet ist.

11. Wärmeflusskomparator nach einem der Ansprüche 5 bis 10, der ferner eine erste Metallschicht (9) aufweist, die auf einer der zweiten Schichten (7, 8) aus zweitem Isolierwerkstoff, gegen deren Fläche, die der thermoelektrischen Schaltung entgegen gesetzt ist, angeordnet ist.

12. Wärmeflusskomparator nach einem der Ansprüche 5 bis 10, der ferner zwei Metallschichten (9, 10) aufweist, die jeweils gegen die zweiten Schichten (7, 8) aus zweitem Isolierwerkstoff, gegen deren Flächen, die der thermoelektrischen Schaltung entgegen gesetzt sind, angeordnet sind.

13. Wärmeflusskomparator nach einem der vorhergehenden Ansprüche, bei dem der erste Metallwerkstoff auf Konstantanbasis beruht.

14. Wärmeflusskomparator nach einem der Ansprüche 1 bis 12, bei dem der erste Metallwerkstoff auf Kupfer beruht.

15. Wärmeflusskomparator nach einem der vorhergehenden Ansprüche, bei dem der zweite Metallwerkstoff aus der Liste ausgewählt ist, die Kupfer, Gold, Silber, Nickel und die Legierungen umfasst, die mindestens eines dieser Metalle enthalten.

16. Wärmeflusskomparator nach einem der vorhergehenden Ansprüche, bei dem die thermoelektrische Schaltung mehrere Bänder (1-1, 1-2, 1-3, 1-4) aufweist, die im Wesentlichen eben und von einander parallel sind, die entlang der orthogonalen Richtung (N) übereinander gelagert und untereinander durch mindestens eine Schicht (5) aus Isolierwerkstoff getrennt sind, wobei jedes Band mit ersten Plättchen (2) versehen ist, die derart angeordnet sind, dass die ersten Plättchen aller Bänder senkrecht zueinander entlang der orthogonalen Richtung sind.

17. Wärmeflusskomparator nach einem der Ansprüche 5 bis 16, der auf mindestens einer seiner Eingangsseiten mit einem Träger (100, 101) verbunden werden kann und ferner auf dieser Eingangsseite einen Werkstoff zum thermischen Kontakt mit dem Träger aufweist.

18. Wärmeflusskomparator nach einem der vorhergehenden Ansprüche, der ferner ein Thermoelement (20) zur Temperaturmessung enthält.

19. Wärmeflusskomparator nach Anspruch 18, bei dem das Thermoelement (20) aus zwei Bändern (21, 22) gebildet ist, die jeweils aus einem ersten und einem zweiten unterschiedlichen Metallwerkstoff bestehen, wobei diese zwei Bänder elektrisch von der oder den thermoelektrischen Schaltungen isoliert und miteinander in Berührung sind.

20. Gebrauch eines Wärmeflusskomparators nach einem der Ansprüche 1 bis 19 zum Vergleichen zweier einfallender Wärmeflüsse, die jeweils auf jeder seiner zwei Eingangsseiten empfangen werden.

21. Einsatz eines Wärmeflusskomparators nach einem der Ansprüche 1 bis 19 zum Erfassen einer kalorischen Erscheinung, die auf der Ebene mindestens einer der zwei Eingangsseiten des Komparators auftritt.

22. Einsatz eines Wärmeflusskomparators nach einem der Ansprüche 1 bis 19, zum Erzeugen eines elektrischen Stroms zwischen Verbindungen (200, 201), die Enden des oder der metallischen Bänder der einen oder mehreren thermoelektrischen Schaltungen dieses Wärmeflusskomparators mit einer externen elektrischen Vorrichtung (300) verbinden.
